# FASCICULE DE BREVET EUROPEEN

(11) **EP 0 472 061 B1**
(45) Date de publication et mention de la délivrance du brevet: **17.11.1994**
(21) Numéro de dépôt: 91113372.6
(22) Date de dépôt: 09.08.1991
(51) Int. Cl.: G04C 10/00, H01M 2/10

(54) **Pièce d'horlogerie du type électromécanique**
Elektromechanische Uhr
Electromechanical timepiece

(30) Priorité: 21.08.1990 CH 2711/90
(43) Date de publication de la demande: 26.02.1992
(73) Titulaire: Eta SA Fabriques d'Ebauches, 2540 Granges (CH)
(72) Inventeur: Laszlo, Ferenczy, CH-4053 Bâle (CH)
(74) Mandataire: Caron, Gérard

(56) Documents cités:
- DE-A- 2 539 604
- US-A- 4 623 206
- PATENT ABSTRACTS OF JAPAN, vol. 1, no. 142, 18 novembre 1977, page 7117 E 77; & JP-A-52 80 170
- SCHMUCK & UHREN, no. 23/24, décembre 1980, pages 41-49, Ulm/Donau, DE; "Konstruktiver Aufbau von Batteriehalterungen für Klein- und Grossuhren und systematische Untersuchung aller für die Funktion wichtiger Einflussgrössen"

## Description

La présente invention concerne une pièce d'horlogerie du type électromécanique, et plus particulièrement une pièce d'horlogerie comportant une source d'énergie, telle qu'une pile appelée généralement pile-bouton.

Les pièces d'horlogerie électromécaniques classiques de ce type (PAJ vol.1 no. 142, 18.11.77, p.7117 [E77], & JP-A-52 80 170) comportent un mouvement horométrique qui est essentiellement piloté par un circuit électronique de commande, associé à un résonateur par exemple à quartz. La pile alimente donc le circuit électronique qui entretient les vibrations du résonateur et fournit des impulsions motrices à un moteur, par exemple du type pas à pas. Ce moteur est relié cinématiquement à des moyens indicateurs de temps, le plus fréquemment formés par des aiguilles. Pour relier la pile au circuit électronique de commande, on prévoit des moyens de liaison électrique qui forment un chemin d'alimentation.

Généralement, ce chemin d'alimentation est constitué par deux languettes de liaison électrique, respectivement frontale (négative) et latérale (positive), la première étant disposée pour venir en contact mécanique sur l'une des régions sensiblement plane de la pile, tandis que la seconde est maintenue en appui sur le bord cylindrique de la pile.

Plus précisément, dans les mouvements horométriques comportant une platine réalisée en un matériau plastique injecté, la languette d'appui latérale est ménagée sur un ressort de tige qui est formé par une plaque de métal étampée, cette plaque comportant des languettes supplémentaires, l'une maintenant mécaniquement la base de temps, tandis que l'autre alimente électriquement le circuit électronique de commande.

Par ailleurs, pour que le contact entre le bord cylindrique de la pile et la languette latérale soit le plus sûr et le plus constant possible dans le temps, on prévoit dans une région diamétralement opposée à cette languette un étrier élastique qui est monté fixement sur la platine et qui exerce, toujours sur le bord cylindrique de la pile, une pression qui maintient appliquée cette pile sur la languette latérale formant la connexion électrique positive.

Toutefois, on a observé lors de tests d'homologation à des fréquences particulières, et notamment lors de tests de résistance aux vibrations, que l'étrier de maintien élastique n'assure pas sa fonction de façon stable et permanente, si bien que le bord de la pile a tendance à quitter la languette latérale de liaison électrique, ce qui a bien évidemment pour conséquence une rupture de l'alimentation, et donc une perte de l'heure.

Ainsi, la présente invention a-t-elle pour but de répondre à ces inconvénients en proposant une pièce d'horlogerie dont les moyens de liaison électrique entre la pile et différents organes opérationnels du mouvement assurent, sans risque de défaillances, un contact électrique permanent entre la pile et ces organes opérationnels, et ce pour éviter toute rupture d'alimentation et écart entre l'heure légale et l'heure affichée.

A cet effet, l'invention a pour objet une pièce d'horlogerie du type électromécanique, comportant :
- un mouvement pourvu d'organes de commande, tels qu'un circuit électronique qui est associé à un résonateur et qui pilote un moteur lié cinématiquement à des moyens d'indication de l'heure, tels que des aiguilles,
- des moyens de fourniture d'énergie, tels qu'une pile, susceptibles d'alimenter électriquement lesdits organes de commande,
- des moyens de liaison électrique permettant de relier les pôles de ladite pile auxdits organes de commande par l'intermédiaire d'un premier chemin d'alimentation, caractérisé en ce que lesdits moyens de liaison électrique fournissent un second chemin d'alimentation parallèle formant une voie électrique supplémentaire susceptible d'assurer une liaison quasi permanente et certaine entre au moins l'un des pôles de la pile, notamment matérialisé par son bord latéral, et lesdits organes de commande.

On comprend donc que dans ce cas, en prévoyant un deuxième chemin d'alimentation parallèle au premier, on diminue d'autant les risques de perte de contact dus aux vibrations que peut subir la pièce d'horlogerie.

Selon une autre caractéristique, le second chemin d'alimentation est au moins en partie constitué par le stator du moteur.

On précisera aussi que ce second chemin d'alimentation est de plus constitué par un élément de contact qui est connecté électriquement auxdits organes de commande, et notamment au circuit électronique et qui est en appui sur le stator. Cet élément de contact est avantageusement constitué par une languette d'appui solidaire d'un ressort de tige.

L'invention sera mieux comprise à la lecture de la description détaillée qui suit, prise en référence aux dessins annexés qui sont donnés uniquement à titre d'exemple, et dans lesquels :

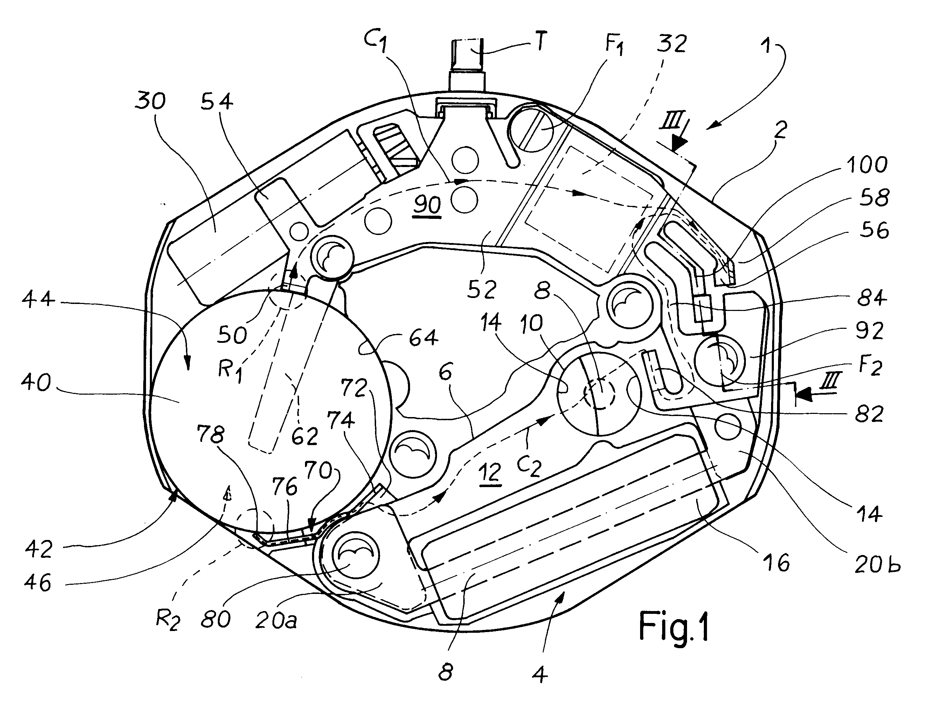

- la figure 1 est une vue de face d'un mouvement destiné à équiper une pièce d'horlogerie selon l'invention,
- la figure 2 est une vue en coupe très schématique d'une partie du mouvement de la figure 1, et qui représente plus particulièrement, ramenés dans un même plan, les éléments constituant le deuxième chemin d'alimentation selon l'invention, et
- la figure 3 est une vue en coupe faite selon la figure III-III de la figure 1, et qui représente une autre languette de maintien apte à conserver le contact électrique entre deux circuits imprimés, respectivement, du moteur et du circuit électronique de la pièce d'horlogerie selon l'invention.

En se référant désormais aux figures annexées, il est représenté une pièce d'horlogerie selon l'invention qui comporte un mouvement 1 constitué essentiellement d'une platine 2, réalisée avantageusement en un matériau synthétique tel que du plastique injecté. Ce mouvement 1 est de plus pourvu d'un moteur 4, par exemple du type pas à pas, qui comporte un stator 6 par rapport auquel est monté pivotant un rotor 8, tel qu'un aimant permanent surmoulé (non représenté), monté libre en rotation sur deux axes à l'intérieur d'une cage 10 engagée dans le stator 6.

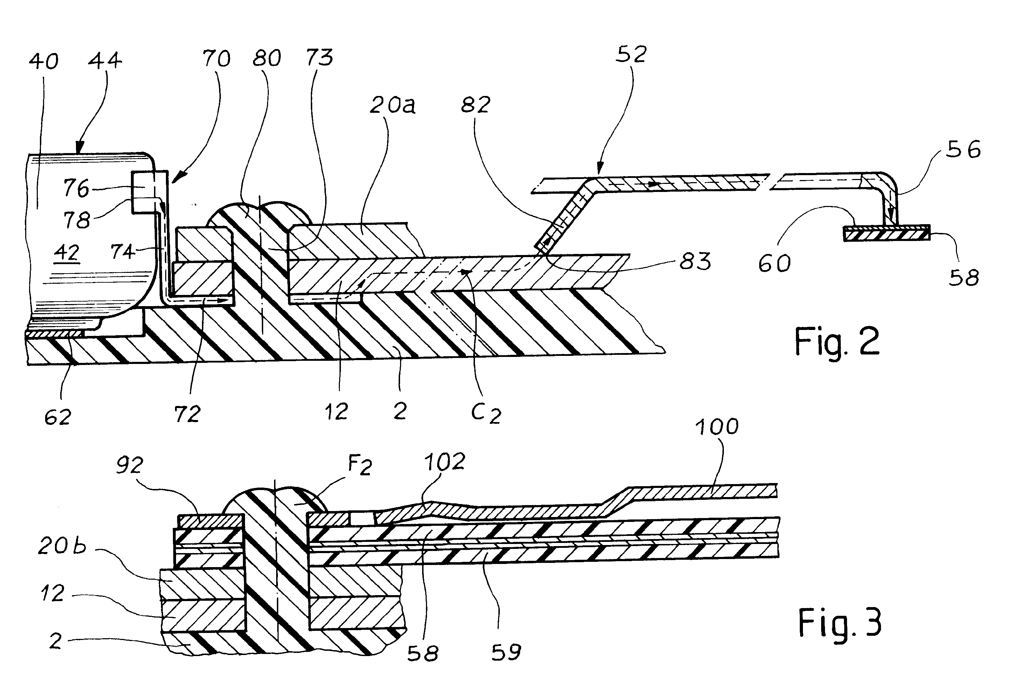

Le stator 6 est constitué par une partie statorique 12 qui matérialise des épanouissements polaires 14 permettant un guidage du flux, créé par une bobine d'excitation 16, vers le rotor 8. La bobine 16 est essentiellement constituée par un enroulement d'un fil conducteur sur plusieurs spires parallèles et superposées, autour d'un noyau 8 dont les oreilles 20a et 20b sont en contact intime plan sur la partie statorique 12, comme on peut le voir pour l'oreille 20a sur la figure 2 et pour l'oreille 20b sur la figure 3. On précisera ici que la partie statorique 12 est de préférence constituée en un matériau tel que du "vacoperm" ou du "permanorm" (marques déposées). Par ailleurs, le mouvement 1 selon l'invention comporte un résonateur 30, constitué généralement par un quartz stabilisé en fréquence, ce résonateur 30 étant relié à un circuit électronique 32, qui, en fonction de la fréquence stabilisée du résonateur 30, est apte à fournir au moteur 4, et plus particulièrement à la bobine 16, des impulsions motrices généralement inversées pour que cette bobine d'excitation 16 puisse former un flux magnétique dans la partie statorique 12. Ce flux provoque la rotation du rotor 8 d'une fraction de tour prédéterminée. Ce fonctionnement étant celui d'une pièce d'horlogerie électromécanique classique, il ne sera pas ici expliqué de façon plus détaillée.

On précisera simplement qu'un pignon du rotor 8 engrène avec une roue d'un rouage (non représenté) aboutissant à des moyens indicateurs de l'heure, tels que des aiguilles, pour effectuer une liaison cinématique entre le moteur 4 et ces moyens indicateurs. On obtient donc dans ce cas une information analogique de l'heure par des moyens électromécaniques.

Toutefois, cet ensemble électromécanique ne peut fonctionner sans l'aide d'une source d'énergie formée, dans cet exemple particulier, par une pile 40 du type pile-bouton. Cette pile d'alimentation 40 permet donc de fournir l'énergie électrique suffisante au circuit électronique 32 qui entretient la vibration du résonateur 30 et qui, par l'intermédiaire d'un groupe de transistors, peut piloter et exciter la bobine 16 du moteur 4. Le résonateur 30, le circuit électronique 32 et le moteur 4 constituent des organes opérationnels de commande du mouvement 1.

Ce type de pile, tel que la pile-bouton 40 est largement commercialisé et est d'utilisation extrêmement courante pour les pièces d'horlogerie électromécaniques, telles que celle objet de la présente invention.

Cette pile 40 est de forme essentiellement cylindrique et présente un bord ou pourtour 42 qui a une forme de portion de cylindre, délimité de part et d'autre par deux régions sensiblement planes de plus grandes surfaces, respectivement 44 et 46. Une des régions, dans cet exemple la région 46, ainsi que le bord cylindrique 42 constituent les deux pôles positif (+) et négatif (-) de la pile 40.

Dans cet exemple particulier, on a défini le bord périphérique cylindrique 42 comme fournissant le pôle positif de la pile, tandis que la surface frontale 46 orientée en regard du mouvement 1, vers la platine 2, constitue le pôle négatif. Bien entendu, ce choix est arbitraire.

Pour que la pile 40 puisse fournir son énergie électrique aux différents éléments opérationnels du mouvement 1, à savoir aux organes de commande 4, 30 et 32, la pièce d'horlogerie selon l'invention comporte des moyens de liaison électrique formant un premier chemin d'alimentation dont seulement une partie C1, qui est la partie positive, est représentée. La partie négative est classique et sa réalisation, non représentée, est à la portée de l'homme du métier.

Les moyens de liaison électrique qui forment ce premier chemin d'alimentation C1 sont tout d'abord constitués par une languette d'appui latéral 50 qui est solidaire d'un ressort de tige 52 réalisé en un matériau électriquement conducteur. Plus particulièrement, le ressort de tige 52 est formé d'une plaque étampée permettant le maintien en position d'une tige T. La languette d'appui latérale 50 vient, de préférence, de matière avec le ressort de tige 52. Le ressort de tige 52 comporte une deuxième languette 54 qui emprisonne et maintient en place le résonateur 30. Il comporte une troisième languette 56 qui s'étend, dans une direction sensiblement normale à la platine 2, vers une partie d'un circuit imprimé 58 du circuit électronique de commande 32, pour venir en appui sur une métallisation 60 ménagée en surface sur ce circuit imprimé et pour alimenter électriquement le circuit électronique 32.

Par ailleurs, une languette d'appui frontale 62, permettant la connexion électrique avec la borne négative de la pile 40, est disposée au fond d'une cavité 64 ménagée dans la platine 2. Cette languette 62 est aussi reliée électriquement au circuit électronique de commande 32 par une partie des moyens de liaison électrique qui n'est pas ici représentée.

Dans une région R2, qui est diamétralement opposée à la région R1 du mouvement 2 où est disposée la languette d'appui latéral 50, est prévu un étrier élastique 70, formant appui latéral, disposé en contact de pression sur le bord cylindrique 42 de la pile 40. Cet étrier élastique d'appui latéral 70 est constitué par une plaque étampée qui est pourvue, d'une part, d'une base 72 (figure 2) engagée sur un tenon 73 venant avantageusement de matière avec la platine en plastique 2, et d'autre part, d'un premier bras 74 s'étendant sensiblement verticalement de façon normale à la platine 2, vers l'extérieur de celle-ci, de façon parallèle au bord cylindrique 42 de la pile 40. Le premier bras 74 de l'étrier élastique d'appui latéral 70 est prolongé par un second bras terminal 76 dont l'extrémité libre 78 forme le contact électrique à proprement parler avec le bord cylindrique 42. Ce second bras 76 peut absorber par une déformation élastique du type flexion, les déplacements intempestifs de la pile 40 dans son logement 64. On remarquera à cet effet que l'extrémité libre 78 du second bras 76 est prolongée vers l'extérieur du mouvement 2 pour venir au proche de son pourtour latéral, de sorte que l'extrémité libre 78 est disposée dans une position la plus diamétralement opposée possible par rapport à la languette d'appui latérale 50 du premier chemin d'alimentation électrique C1.

La base 72 de l'étrier élastique 70 est donc posée en appui sur la platine en plastique 2 du mouvement 1, tandis que sont empilées sur celle-ci, de façon surperposée, d'une part, la partie statorique 12, et d'autre part l'oreille 20a du noyau 8. La base 72 est donc maintenue encastrée en étant bloquée, en sandwich, par cette platine 2 et par la partie statorique 12. Cet ensemble base 72 - partie statorique 12 - oreille 20a est maintenu fixement sur la platine 2 par l'intermédiaire d'une tête 80 du tenon 73 et plus particulièrement par son extrémité libre. La tête 80 est ménagée par une fusion aux ultrasons. On remarquera donc que le contact plan entre la surface supérieure de la base 72 et la surface inférieure de la partie statorique 12 constitue un excellent contact électrique entre le pôle positif de la pile 40 et la partie statorique 12.

Par ailleurs, le ressort de tige 52 comporte une languette supplémentaire 82 venant de préférence de matière avec celui-ci et qui forme un élément de contact venant en appui sur la surface supérieure du stator 6, et plus particulièrement sur la surface supérieure de sa partie statorique 12. Cette languette supplémentaire 82 est reliée à la languette terminale 56 par une languette de liaison 84 de même ménagée intégralement dans le ressort de tige 52. Ainsi, on comprend donc que l'étrier élastique d'appui latéral 70, la partie statorique 12, l'élément de contact 82 ainsi que la languette de liaison 84 constituent au moins en partie un second chemin d'alimentation C2 qui est parallèle au premier et qui peut assurer, via le stator 6, une liaison quasi permanente et certaine entre le pôle positif de la pile et les organes de commande du mouvement, tels que le circuit électronique 32. Ce second chemin d'alimentation C2 comporte une partie commune avec le premier chemin d'alimentation C1; cette partie commune étant la partie négative, non représentée, des moyens de liaison électrique selon l'invention. On remarquera par ailleurs que l'extrémité libre de la languette supplémentaire 82 du second chemin d'alimentation électrique C2 présente un angle vif formant une arête d'attaque 83 capable, comme on va le comprendre, de pénétrer sensiblement dans la partie statorique 12.

En effet, le ressort de tige 52, et plus particulièrement la languette supplémentaire de contact 82 est réalisée en un matériau tel que du "durimphy" (marque déposée), si bien que les matériaux qui constituent cette languette supplémentaire d'appui 82 et la partie statorique 12 elle-même sont choisis de sorte que le matériau de la partie statorique 12 présente une dureté superficielle inférieure à la dureté de la languette de contact 82. A titre d'exemple, la partie statorique 12 présente une dureté Vickers de l'ordre de 200 tandis que la languette 82 présente une dureté du type acier de l'odre de 540 Vickers. Cette pénétration superficielle de la languette supplémentaire 82 dans la surface supérieure de la partie statorique 12 assure un bon contact électrique entre ces éléments.

Par ailleurs, on observera que le ressort de tige 52 comporte deux régions caractéristiques, une première constituée par une section principale 90, qui forme le ressort de tige proprement dit et de laquelle s'étendent la languette de connexion électrique 50, la languette de maintien 54, la languette de liaison 84 ainsi que la languette terminale 56 qui est reliée au circuit imprimé 58 du circuit électronique 32. Cette première section principale 90 forme un des éléments essentiels du premier chemin d'alimentation électrique C1.

Ce ressort de tige 52 comporte de plus une seconde section principale 92 qui est partie intégrante du second chemin d'alimentation électrique C2 et de laquelle s'étend la languette supplémentaire de contact 82 en direction de la partie statorique 12. Les deux sections principales 90 et 92 sont reliées entre elles par la languette de liaison 84 qui forme un organe de connexion électrique entre ces deux sections. On comprend donc que tous ces éléments, en venant de matière entre eux, sont réalisables de façon très économique et peuvent être aussi montés très rapidement sur la platine tout en étant transportables et manipulables simultanément par des opérations simplifiées. On remarquera par ailleurs que les deux sections principales respectivement 90 et 92 sont fixées sur la platine en matière plastique 2 par l'intermédiaire de leurs moyens de fixation propres respectivement F1 et F2, le moyen le fixation F1 de la première section principale 90 étant constitué par une vis et par la tête d'un tenon similaire au tenon 73, tandis que le moyen de fixation F2 de la seconde section 92 est constitué par un tenon aussi semblable au tenon 73.

On remarquera par ailleurs que de la première section principale 90 s'étend une autre languette de maintien 100, orientée vers la seconde région 92, et dont l'extrémité libre 102 est dirigée sensiblement en direction de la platine 2 pour venir en appui uniquement mécanique sur le circuit imprimé 58 du circuit électronique de commande 32 disposé en appui sur le circuit imprimé 59 du moteur 4 qui est connecté à la bobine 16. Par conséquent, cette languette de maintien 100 qui est tenue essentiellement par la première section principale 90 du ressort de tige 52 peut à elle seule maintenir en appui les deux circuits imprimés respectivement 58 et 59, si la contrainte générée par l'élément de contact 82 venait à rompre la tête du tenon F2.

## Revendications

1. Pièce d'horlogerie du type électromécanique, comportant :
- un mouvement (1) pourvu d'organes de commande formés par un circuit électronique (32) qui est associé à un résonateur (30) et qui pilote un moteur (4) lié cinématiquement à des moyens d'indication de l'heure, tels que des aiguilles,
- une source d'énergie, telle qu'une pile (40) susceptible d'alimenter électriquement lesdits organes de commande (32),
- des moyens de liaison électrique (50, 52, 56, 62) permettant de relier les pôles de ladite pile (40) auxdits organes de commande (32) par l'intermédiaire d'un premier chemin d'alimentation (C1), caractérisée en ce que lesdits moyens de liaison électrique fournissent un second chemin d'alimentation (C2) parallèle au premier, susceptible d'assurer une liaison quasi permanente entre au moins l'un des pôles de la pile (40) et lesdits organes de commande (32).

2. Pièce selon la revendication 1, dans laquelle ledit moteur (4) est constitué par un rotor (8) et par un stator (6), caractérisée en ce que ledit second chemin d'alimentation (C2) est au moins en partie constitué par ledit stator (6).

3. Pièce selon la revendication 2, caractérisée en ce que ledit second chemin d'alimentation (C2) est de plus constitué par une languette de contact (82) qui est connectée électriquement audit circuit électronique (32) et qui est en appui sur ledit stator (6).

4. Pièce selon la revendication 3, caractérisée en ce que ladite languette de contact (82) est solidaire d'un ressort de tige (52) qui a la forme d'une plaque étampée, tandis qu'elle est en appui élastique sur ledit stator (6).

5. Pièce selon la revendication 4, caractérisée en ce que ladite languette de contact (82) vient de matière avec ledit ressort de tige (52) et est découpée dans celui-ci.

6. Pièce selon la revendication 5, caractérisée en ce que ladite plaque formant ressort de tige (52) est découpée en deux sections principales de plus grande surface (90, 92), une première (90) qui forme le ressort (52) à proprement parler et qui forme le premier chemin d'alimentation (C1), et une deuxième section (92) qui est partie intégrante du second chemin d'alimentation (C2), ces deux sections (90, 92) étant reliées entre elles par un organe de connexion électrique (84).

7. Pièce selon la revendication 6, caractérisée en ce que l'organe de connexion (84) vient de matière avec les deux sections principales (90, 92).

8. Pièce selon la revendication 7, caractérisée en ce que les deux sections (90, 92) sont fixées isolément sur la platine (2) par des moyens de fixation propres (F1, F2).

9. Pièce selon la revendication 8, caractérisée en ce que de la première section (90) s'étend, en direction de la seconde (92), au moins une languette supplémentaire de maintien (100) en appui élastique sur un circuit imprimé (58) du circuit électronique de commande (32), ce circuit imprimé étant directement en appui sur un circuit imprimé (59) relié au moteur.

## Patentansprüche

1. Elektromechanisches Uhrwerk, umfassend:
- ein Werk (1), versehen mit Steuerorganen, gebildet von einem elektronischen Schaltkreis (32), der einem Resonator (30) zugeordnet ist und der einen Motor (4) ansteuert, der kinematisch mit Zeitanzeigemitteln, wie Zeigern, verbunden ist,
- eine Energiequelle, wie eine Batterie (40), mittels der die Steuerorgane (32) elektrisch anspeisbar sind,
- elektrische Verbindungsmittel (50, 52, 56, 62), die ermöglichen, die Pole der Batterie (40) mit den Steuerorganen (32) über einen ersten Speisepfad (C1) zu verbinden, dadurch gekennzeichnet, daß die elektrischen Verbindungsmittel einen zweiten Speisepfad (C2) parallel zum ersten bereitstellen, wodurch eine quasi permanente Verbindung zwischen mindestens einem der Pole der Batterie (40) und den Steuerorganen (32) sicherstellbar ist.

2. Werk nach Anspruch 1, bei dem der Motor (4) von einem Rotor (8) und einem Stator (6) gebildet ist, dadurch gekennzeichnet, daß der zweite Speisepfad (C2) mindestens teilweise von dem Stator (6) gebildet ist.

3. Werk nach Anspruch 2, dadurch gekennzeichnet, daß der zweite Speisepfad (C2) ferner von einer Kontaktzunge (82) gebildet wird, die elektrisch mit dem elektronischen Schaltkreis (32) verbunden ist und die auf dem Stator (6) abgestützt ist.

4. Werk nach Anspruch 3, dadurch gekennzeichnet, daß die Kontaktzunge (82) mit einer Wellenfeder (52) verbunden ist, die die Form einer gestanzten Platte besitzt, während sie in elastischer Anlage an dem Stator (6) ist.

5. Werk nach Anspruch 4, dadurch gekennzeichnet, daß die Kontaktzunge (82) einstückig mit der Wellenfeder (52) ausgebildet ist und aus dieser ausgeschnitten ist.

6. Werk nach Anspruch 5, dadurch gekennzeichnet, daß die Platte, welche die Wellenfeder (52) bildet, in zwei Hauptabschnitten größerer Oberfläche (90, 92) geschnitten ist, von denen ein erster (90), welcher die eigentliche Feder (52) bildet und den ersten Speisepfad (C1) bildet, und von denen eine zweite (92) integraler Bestandteil des zweiten Speisepfades (C2) ist, welche beiden Abschnitte (90, 92) miteinander durch ein elektrisches Verbindungsorgan (84) verbunden sind.

7. Werk nach Anspruch 6, dadurch gekennzeichnet, daß das Verbindungsorgan (84) einstückig mit den beiden Hauptabschnitten (90, 92) ausgebildet ist.

8. Werk nach Anspruch 7, dadurch gekennzeichnet, daß die beiden Abschnitte (90, 92) isolierend auf der Platine (2) durch zugeordnete Befestigungsmittel (F1, F2) festgelegt sind.

9. Werk nach Anspruch 8, dadurch gekennzeichnet, daß sich von dem ersten Abschnitt (90) in Richtung des zweiten (92) mindestens eine zusätzliche Haltezunge (100) erstreckt, die elastisch an einem gedruckten Schaltkreis (58) des elektronischen Steuerschaltkreises (32) anliegt, welcher gedruckte Schaltkreis direkt aufliegt auf einem mit dem Motor verbundenen gedruckten Schaltkreis (59).

## Claims

1. Electromechanical timepiece comprising :
- a movement (1) provided with control means formed by an electronic circuit (32) which is associated with a resonator (30) and drives a motor (4) kinematically linked to time display means such as hands,
- an energy source, such as a battery (40) for supplying power to said control means (32),
- electrical connection means (50, 52, 56, 62) which connect the poles of said battery (40) to said control means (32) by way of a first supply path (C1), characterized in that said electrical connection means supply a second supply path (C2) in parallel to the first, adapted to provide a substantially permanent connection between at least one of the poles of the battery (40) and said control means (32).

2. Timepiece according to claim 1 in which said motor (4) is composed of a rotor (8) and a stator (6), characterized in that said second supply path (C2) is at least partially constituted by said stator (6).

3. Timepiece according to claim 2, characterized in that said second supply path (C2) is in addition composed of a contact strip (82) which is electrically connected to said electronic circuit (32) and which bears against said stator (6).

4. Timepiece according to claim 3, characterized in that said contact strip (82) is integral with a spring pin (52) which is formed as an embossed wafer, whereas it bears resiliently against said stator (6).

5. Timepiece according to claim 4, characterized in that said contact strip (82) is of the same material as said spring pin (52) and is cut therein.

6. Timepiece according to claim 5, characterized in that said wafer forming the spring pin (52) is cut in two main sections of larger surface (90, 92), a first (90) which forms the spring (52) per se and which forms the first supply path (C1) and a second section (92) which is an integral part of the second supply path (C2), these two sections (90, 92) being connected together by electrical connection means (84).

7. Timepiece according to claim 6, characterized in that the connection means (84) are of the same material as the two main sections (90, 92).

8. Timepiece according to claim 7, characterized in that the two sections (90, 92) are individually mounted on the plate (2) by separate fixing means (F1, F2).

9. Timepiece according to claim 8, characterized in that at least one additional retaining strip (100) extends from the first section (90) in the direction of the second (92) and bears resiliently against a printed circuit (58) of the electronic control circuit (32), this printed circuit bearing directly on a printed circuit (59) connected to the motor.
